# EUROPÄISCHE PATENTANMELDUNG

(11) **EP 0 897 785 A1**
(43) Veröffentlichungstag der Anmeldung: **24.02.1999**
(21) Anmeldenummer: 98112849.9
(22) Anmeldetag: 10.07.1998
(51) Int. Cl.: B29C 45/16, B29C 45/14, G06K 19/077

(54) **Verfahren zum Herstellen einer Chipkarte, Vorrichtung zur Durchführung des Verfahrens und Chipkarte**

(30) Priorität: 20.08.1997 DE 19736082
(71) Anmelder: Orga Kartensysteme GmbH, 33104 Paderborn (DE)
(72) Erfinder: Fischer, Dirk, Dr., 33106 Paderborn (DE)

(57) **Zusammenfassung**

Die Erfindung bezieht sich auf ein Verfahren und eine Vorrichtung zum Spritzgießen zur Durchführung des Verfahrens nach Anspruch 1, mit einer Form, welche wenigstens einen Formraum einschließt und die relativ zueinander bewegliche Formteile aufweist, wobei
- eine erste Einspritzdüse (8) vorgesehen ist zum Einspritzen eines ersten Kunststoffmaterials in einen ersten Teilformraum (6, 23),
- eine zweite Einspritzdüse (9) vorgesehen ist zum Einspritzen eines zweiten Kunststoffmaterials in einen zweiten Teilformraum (7, 22) und
- die erste Einspritzdüse (8) senkrecht zu der zweiten Einspritzdüse (9) angeordnet ist.

## Beschreibung

Die Erfindung betrifft ein Verfahren zum Herstellen einer Chipkarte nach dem Oberbegriff des Patentanspruchs 1, eine Vorrichtung zur Durchführung des Verfahrens nach dem Oberbegriff des Patentanspruchs 8 sowie eine Chipkarte nach dem Oberbegriff des Patentanspruchs 14.

Aus der WO 92/20506 A1 ist ein Verfahren und eine Vorrichtung zum Herstellen einer Chipkarte bekannt, wobei die Chipkarte aus einem einzigen Kunststoffmaterial hergestellt wird. Das Formwerkzeug umfaßt ein Formwerkzeugteil, das in Querrichtung des Formraums beweglich ausgebildet ist, so daß der Formraum verkleinert werden kann zur Einbettung eines Chipmoduls in den Kartenkörper, nachdem das Kunststoffmaterial in den Formraum gespritzt worden ist. Mittels eines quer bewegbaren Stanzwerkzeugs wird eine in dem Kartenkörper eingebettete Minichipkarte unter Bildung eines Stanzspaltes hergestellt. Nachteilig an dem bekannten Verfahren ist, daß die Materialeigenschaften des Kunstoffmaterials bestimmend sind für die Beanspruchung des Kartenkörpers einerseits und der Minichipkarte andererseits.

Aufgabe der Erfindung ist es, ein Verfahren zum Herstellen einer Chipkarte und eine Vorrichtung zur Durchführung des Verfahrens anzugeben, so daß eine Minichipkarte und ein die selbe umgebender Kartenkörper über an die Bedürfnisse des Kartennutzers angepaßte Materialeigenschaften verfügen.

Zur Lösung dieser Aufgabe weist die Erfindung die Merkmale des Patentanspruchs 1 und des Patentanspruchs 8 auf.

Nach dem Patentanspruch 1 wird die Chipkarte durch Einspritzen eines ersten Kunststoffmaterials in einen ersten Teilformraum und durch anschließendes Einspritzen eines zweiten Kunststoffmaterials in einen zweiten Teilformraum hergestellt, wobei ein den zweiten Teilformraum umschließender Schieber herausbewegt wird, so daß sich das zweite Kunststoffmaterial an einer Grenzfläche des ersten Kunststoffmaterials mit demselben verbindet oder an diesem anliegt. Vorteilhaft kann somit eine Chipkarte geschaffen werden, deren Minichipträger aus einem anderen Material besteht als der denselben umgebenden Kartenkörper. Beispielsweise kann der Kartenkörper aus einem Recyclat und der Minichipträger aus einem hochwertigen PC bestehen. Alternativ kann durch Zusatz unterschiedlicher Farbmittel der Kartenkörper eine andere Farbe aufweisen als der Minichipträger.

Nach einer Weiterbildung der Erfindung sind die Einspritzdüsen senkrecht zueinander angeordnet. Ein in dem Formraum angeordneter Schieber trennt den ersten von dem zweiten Teilformraum. Hierdurch wird ein sicheres Einspritzen der Kunststoffmaterialien in jeweils einen vorgegebenen Formraumbereich ermöglicht.

Nach einer Weiterbildung der Erfindung wird der Schieber quer zur Längsebene des Formraums verschoben, so daß nachfolgend das zweite Kunststoffmaterial in den vollständig freigegebenen zweiten Teilformraum eingespritzt werden kann. Vorzugsweise wird der Schieber auf eine der zweiten Düse abgewandten Seite des Formraums herausbewegt.

Nach einer Weiterbildung der Erfindung liegen die Randflächen eines Minichipträgers einerseits und die Randflächen eines Kartenkörpers andererseits lose aneinander, wobei ein schmaler Spalt gebildet wird. Vorzugsweise wird dies ohne nachfolgende Stanzung des Spaltes, sondern durch Nutzbarmachung der Schrumpfung des Kunststoffmaterials ermöglicht. Grundgedanke hierbei ist, daß das zweite Kunststoffmaterial erst dann eingespritzt wird, nachdem das erste Kunststoffmaterial bereits geschrumpft ist. Durch die anschließende Schrumpfung des zweiten Kunststoffmaterials, wobei dieses zweite Kunststoffmaterial den den Minichipträger umschließenden Kartenkörper bildet, drücken die Randflächen des Kartenkörpers gegen die Randflächen des Minichipträgers, so daß eine klemmende Halterung des Minichipträgers in einer Aussparung des Kartenkörpers gewährleistet ist. Die Minichipkarte ist somit formschlüssig mit dem Kartenkörper verbunden. Sie kann von einem Benutzer ohne großen Kraftaufwand aus der Aussparung des Kartenkörpers entfernt und wieder eingestzt werden.

Vorzugsweise sind die Konturen eines Stempels derart gestaltet, daß die Minichipkarte mittels eines Schnap- oder Rastverschlusses in der Aussparung des Kartenkörpers gehalten ist. Dazu weist der Stempel schräge Flächen auf, so daß die Schmalseiten der Minichipkarte als unterschiedlich orientierte und zu den Schmalseiten der Aussparung korrespondierende Schrägflachen ausgebildet sind.

Vorzugsweise bestehen die Kunststoffmaterialien aus Werkstoffen, die sich chemisch nicht miteinander verbinden lassen. Als Materialkombination käme beispielsweise PS und PC in Frage.

Nach einer Weiterbildung der Erfindung weist der Schieber an einer Seite einen Kavitätsformer auf, dessen Kontur mit einer in dem Minichipträger anzubringenden Kavität korrespondiert. Der Schieber wird nur so weit aus dem Teilformraum herausbewegt, bis der Kavitätsformer die gewünschte Kavität in dem zweiten Teilformraum ausfüllt. Nach Erkalten des zweiten Kunststoffmaterials wird der Schieber vollständig aus dem Formraum entfernt, wobei die vorgegebene Kavität ausgebildet ist. Vorteilhaft hat der Schieber eine Doppelfunktion. Zum einen trennt er den ersten Teilformraum von dem zweiten Teilformraum. Zum anderen ermöglicht er durch spezielle Ausbildung seiner Kontur die Herstellung einer Kavität.

Nach einer Weiterbildung der Erfindung ist der Schieber hohlförmig ausgebildet. Vorteilhaft wird hierdurch das Einbringen eines Stempels ermöglicht, der mit einer Stirnfläche das Chipmodul in den zweiten Teilformraum einpreßt. Der Stempel wird mit dem Chipmodul koaxial zum Schieber durch eine Öffnung desselben bewegt, nachdem der Schieber aus dem zweiten Teilformraum herausbewegt worden ist. Alternativ kann der Schieber auch in Richtung der zweiten Düse bewegt werden.

Nach einer Weiterbildung der Erfindung ist der Schieber hohlförmig ausgebildet und weist an einer der Herausbewegungsrichtung abgewandten Seite mindestens eine Mulde auf. In einer ersten Stellung des Schiebers wird der erste von dem zweiten Teilformraum vollständig getrennt, so daß das erste Kunststoffmaterial in den ersten Teilformraum eingespritzt werden kann, ohne daß das Kunststoffmaterial in den zweiten Teilformraum eindringen kann. In einer zweiten Stellung wird der Schieber so weit herausbewegt, daß die Mulde oder Einkerbung eine Verbindung zwischen dem ersten und zweiten Teilformraum ermöglicht. Nach Einspritzen des zweiten Kunststoffmaterials wird an dieser Stelle eine Verbindungsnase geschaffen, die vor Gebrauch der Minichipkarte durchtrennt wird.

Der Erfindung liegt ferner die Aufgabe zugrunde, eine Chipkarte mit variablen Materialeigenschaften zu schaffen.

Zur Lösung dieser Aufgabe weist die erfindungsgemäße Chipkarte die Merkmale des Patentanspruchs 14 auf.

Der Vorteil der erfindungsgemäßen Chipkarte besteht insbesondere darin, daß die Minichipkarte aus einem anderen Material mit anderen Materialeigenschaften bestehen kann als der Kartenkörper. Beispielsweise kann die Minichipkarte aus einem sehr festen Material und der Kartenkörper aus einem zähen oder flexiblen Material bestehen. Alternativ kann der Kartenkörper aus einem kostengünstigen Rezyklat bestehen.

Nach einer bevorzugten Ausführungsform der Chipkarte besteht diese aus Materialien, die nicht chemisch miteinander verbindbar sind, so daß auf einfache Weise eine formschlüssig in einer Aussparung des Kartenkörpers gehalterte Minichipkarte herstellbar ist, bei der auf ein nachträgliches Ausstanzen eines Spaltes verzichtet werden kann.

Mehrere Ausführungsbeispiele der Erfindung werden nachfolgend anhand von Zeichnungen näher erläutert.

Es zeigen:
- Fig. 1: ein schematischer Teilschnitt einer Vorrichtung zum Herstellen eine Chipkarte mit Minichipkarte mit einem Schieber nach einer ersten Ausführungsform,
- Fig. 2: ein schematischer Teilschnitt einer Vorrichtung zum Herstellen eine Chipkarte mit Minichipkarte mit einem Schieber nach einer zweiten Ausführungsform,
- Fig. 3: ein schematischer Teilschnitt einer Vorrichtung zum Herstellen eine Chipkarte mit Minichipkarte mit einem Schieber nach einer dritten Ausführungsform,
- Fig. 4: ein schematischer Teilschnitt einer Vorrichtung zum Herstellen eine Chipkarte mit Minichipkarte mit einem Schieber nach einer vierten Ausführungsform,
- Fig. 5: eine Draufsicht auf eine Chipkarte mit eingebetteter Minichipkarte,
- Fig. 6: eine Draufsicht auf eine Chipkarte nach einer weiteren Ausführungsform und
- Fig. 7: eine vergrößerte Darstellung einer Einzelheit X aus Fig. 6.

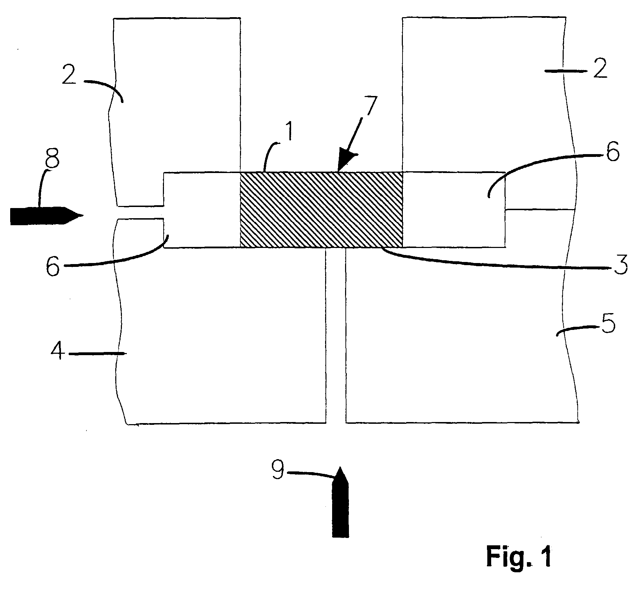

In Fig. 1 ist eine Vorrichtung zum Herstellen einer Chipkarte mit einem Schieber 1 nach einem ersten Ausführungsbeispiel dargestellt. Der Schieber 1 ist beweglich in einer oberen Formhälfte 2 gelagert. Er kann als bewegbarer Stempel mit einer flächigen Stirnseite 3 ausgebildet sein.

In einer Ausgangsstellung des Schiebers 1 liegt dieser plan an einer Oberfläche von zwei unteren Formteilen 4 und 5 an. Der Formraum besteht nun aus einem ersten Teilformraum 6 und einem durch den Schieber 1 ausgefüllten Teilformraum 7, der von dem ersten Teilformraum 6 vollständig umschlossen ist. In einem ersten Schritt wird ein erstes Kunststoffmaterial durch eine erste Düse 8 in den ersten Teilformraum 6 gespritzt. Das Material kann beispielsweise Polyvinylchlorid (PVC), Polypropylen (PP), Acrylnitrit-Butadien-Styrol-Copolymerisat (ABS) oder ein Recyclat aus diesen Materialien sein.

In einem zweiten Schritt wird der Schieber 1 aus dem Formraum unter Freilegung des zweiten Teilformraums 7 entfernt, so daß mittels einer zweiten Düse 9, die senkrecht zu der ersten Düse 8 angeordnet ist, ein zweites Kunststoffmaterial in den zweiten Teilformraum 7 eingespritzt werden kann. Das zweite Kunststoffmaterial kann aus einem PC, ABS, PP, PVC oder Recyclat bestehen, wobei gegebenenfalls bestimmte Farbpigmente enthalten sind, so daß eine andere Farbgebung eines sich so im Teilformraum 7 bildenden Minichipträgers 10 erzeugt wird. Alternativ kann das zweite Kunststoffmaterial so gewählt werden, daß der Minichipträger 10 eine bessere Biegefestigkeit, Formstabilität oder Temperaturfestigkeit hat als der aus dem ersten Kunststoffmaterial bestehenden Kartenkörper 11. Beispielsweise kann der Kartenkörper 11 aus einem besonders elastischen ersten Kunststoffmaterial bestehen.

Nach Verschweißung bzw. chemischer Verbindung an den Grenzflächen der als Schmelze vorliegenden ersten und zweiten Kunststoffmaterialien wird in einem weiteren Verarbeitungsschritt in den Minichipträger 11 eine Kavität zur Aufnahme eines Chipmoduls 12 eingefräst sowie durch Stanzung mindestens ein Spalt 13 erzeugt.

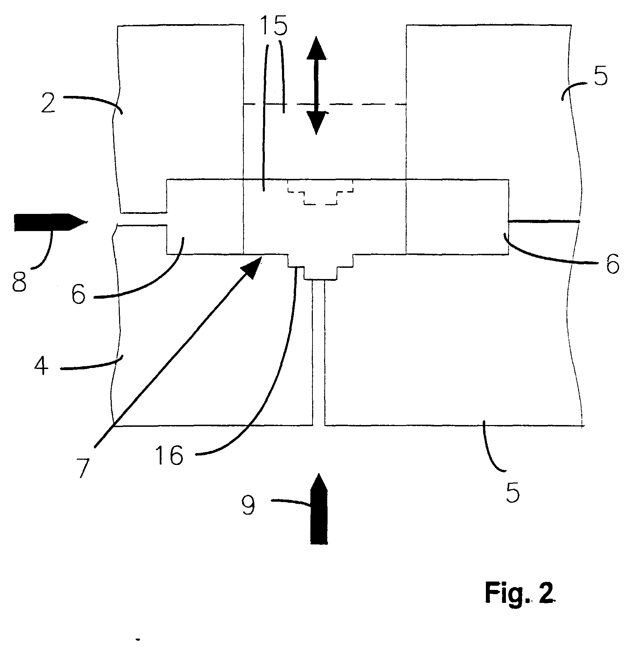

Nach einem zweiten Ausführungsbeispiel gemäß Fig.2 weist die Vorrichtung einen Schieber 15 auf, dessen untere Seite stufenförmig entsprechend der Kavität ausgebildet ist und einen Kavitätsformer 16 bildet. Die weiteren Bauteile dieses Ausführungsbeispiels entsprechen den Bauteilen des ersten Ausführungsbeispiels und tragen die gleichen Bezugsziffern.

In Übereinstimmung mit dem gemäß dem ersten Ausführungsbeispiel beschriebenen Herstellungsablauf wird das erste Kunststoffmaterial in den ersten Teilformraum 6 eingespritzt. Danach wird der Schieber 15 nur so weit aus dem zweiten Teilformraum 7 herausbewegt, als der Kavitätsformer 16 des Schiebers 15 sich noch innerhalb des Teilformraums 7 befindet, d.h. der abragende Kavitätsformer 16 ist vollständig innerhalb des Teilformraums 7 positioniert. Erst nach Einspritzen des zweiten Kunststoffmaterials mittels der Düse 9 wird der Kavitätsformer 16 aus dem Formraum entfernt, so daß eine Kavität in der Chipkarte ausgebildet ist. Nachfolgend braucht lediglich eine Stanzung vorgenommen werden zur Bildung des Spaltes 13.

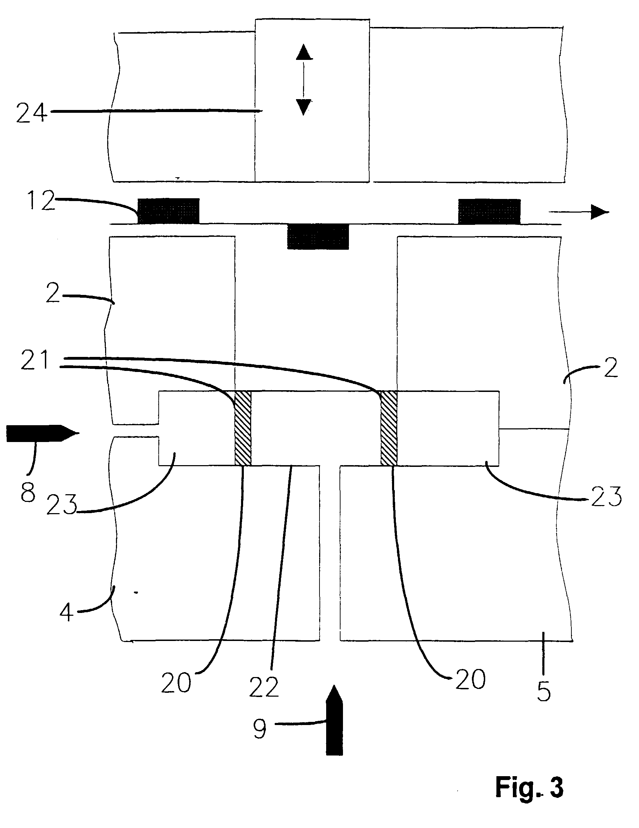

Nach einem weiteren Ausführungsbeispiel gemäß Fig. 3 ist ein Schieber 20 hohlförmig bzw. rahmenförmig ausgebildet, wobei die Rahmenseiten 21 einen inneren Teilformraum als zweiten Teilformraum 22 von einem äußeren ersten Teilformraum 23 trennen. Die Öffnung des Schiebers 20 ermöglicht, daß ein Stempel 24 in entgegengesetzter Richtung zu der Schieberbewegung auf einen Teilbereich des zweiten Teilformraums 22 bewegt werden kann. Der Stempel 24 erfaßt ein senkrecht zur Bewegungsrichtung des Stempels 24 auf einem Endlosband laufendes Chipmodul 12 und drückt es mit seiner Stirnseite in Richtung des Formraums. Der Stempel 24 kommt zum Stehen, sobald die Unterkante des Chipmoduls 12 mit der Oberkante des zweiten Teilformraums 22 abschließt. Erst jetzt wird das zweite Kunststoffmaterial in den zweiten Teilformraum 22 eingespritzt und dann der Stempel 24 weiter gesenkt, so daß die Oberseite des Chipmoduls 12 bündig mit der Oberseite des zweiten Teilformraums 22 bzw. des Minichipträgers 10 abschließt. Nach ausreichender Abkühlzeit wird die Form geöffnet, wobei das Chipmodul 12 in der Chipkarte fest integriert ist. In einem folgenden Schritt wird in bekannter Weise durch Stanzung der Spalt 13 an den Teilformgrenzen ausgestanzt.

Falls der Schieber 21 nicht gleichzeitig mit dem Herunterbewegen des Stempels 24 nach oben verschoben wird, kann dieser erst nach Einspritzen des zweiten Kunststoffmaterials entfernt werden, so daß eine nachfolgende Stanzung zur Erzeugung des Spalts 13 entfallen kann. Diese Variante ist vorzugsweise dann anwendbar, wenn die beiden Kunststoffmaterialien unterschiedliche Schrumpfeigenschaften aufweisen, so daß die Minichipkarte klemmend in dem Kartenkörper gehalten ist. Die Ausnutzung des Schrumpfverhaltens wird weiter unten in der Beschreibung beschrieben.

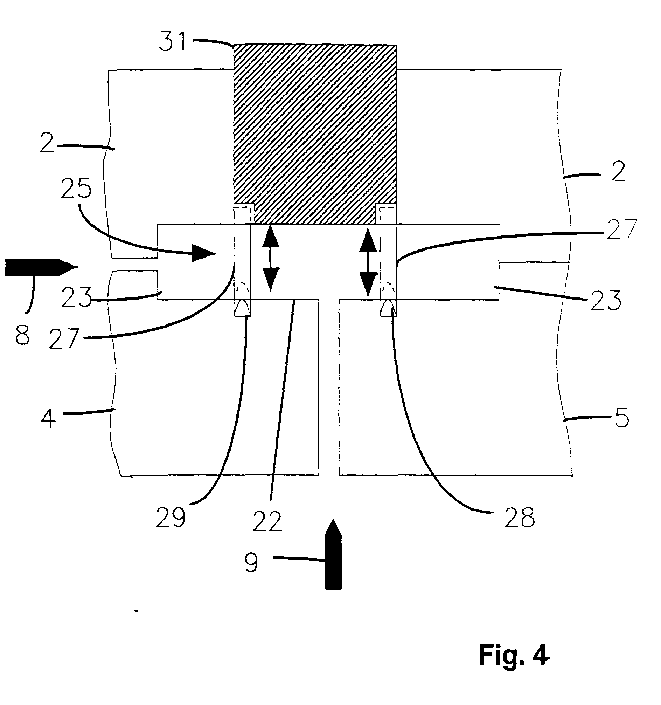

Nach einem weiteren Ausführungsbeispiel gemäß Fig. 4 ist ein Schieber 25 hohlförmig ausgebildet und weist in Abwandlung zum vorhergehenden Ausführungsbeispiel zusätzlich bereichsweise an den Unterseiten von Rahmenseiten 27 Einkerbungen 28 auf. In einer ersten Stellung des Schiebers 25 sind die Einkerbungen 28 unterhalb des Formraums 22 in einer Nut 29 der Formteile 4, 5 angeordnet, so daß das erste Kunstoffmaterial in den ersten Teilformraum 23 eingespritzt werden kann, wobei der zweite innere Teilformraum 22 vollständig durch den Schieber 25 abgesperrt ist. In einer darauffolgenden zweiten Stellung des Schiebers 25 schließt dieser untenseitig im wesentlichen bündig mit der Unterseiten des Teilformraums 22 ab, wobei die Einkerbungen 28 jeweils eine Verbindungsnaht 30 zwischen dem ersten und zweiten Teilformraum 23 bzw. 22 schaffen. Nach Einspritzern des zweiten Kunststoffmaterials in den zweiten Teilformraum 22 verteilt sich dieses Material unter Verschweißung in den Bereichen der Einkerbung 28 in dem zweiten Teilformraum 22. Nachfolgend wird der Schieber 25 aus dem Formraum entfernt. Durch die Rahmenseiten 27 des Schiebers 25 wird auf diese Weise der Spalt 13 zwischen dem Kartenkörper 11 und dem Minichipträger 10 geschaffen. Durch die Öffnung des Schiebers 25 kann - wie im vorherigen Ausführungsbeispiel - ein Stempel 31 zum Einbringen des Chipmoduls 12 eingreifen, so daß nach Entfernen des Schiebers 25 und Erkalten des Kunststoffmaterials der Stempel 31 die fertige Chipkarte ausstoßen kann.

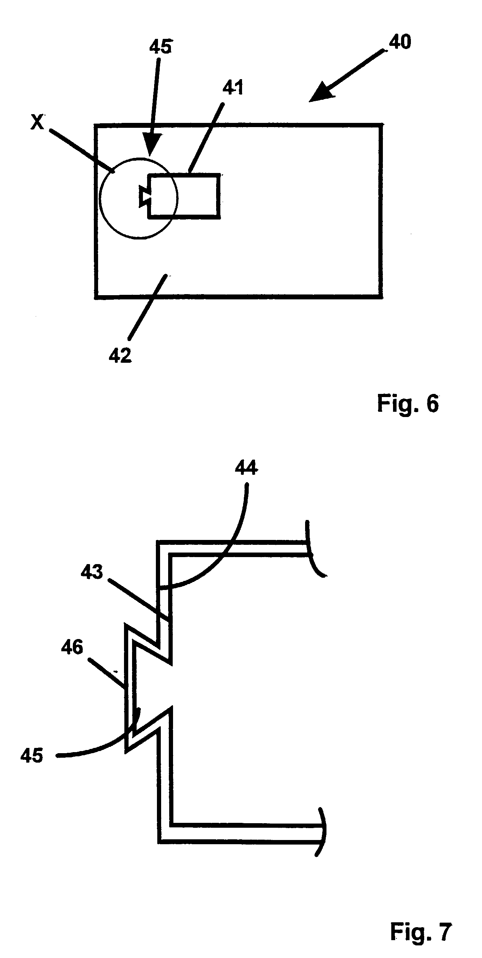

Nach einem Ausführungsbeispiel gemäß Fig. 6 und Fig. 7 besteht eine Chipkarte 40 aus einer Minichipkarte 41 in einem ersten Kunststoffmaterial und einem Kartenkörper 42 aus einem zweiten Kunststoffmaterial. Die beiden Kunststoffmaterialien sind derart ausgewählt, daß sie chemisch nicht miteinander verbindbar sind. Dies bewirkt, daß bei erhöhter Temperatur, also bei Betriebstemperatur während des Spritzgießens der Karte 40, keine chemischen Verbindungskräfte wirken, so daß die Minichipkarte 41 nach dem Abkühlen derselben mit einer Randfläche 43 lose an einer korrespondierenden Randfläche 44 des Kartenkörpers 42 zur Anlage kommt. Vorzugsweise wird die Herstellung der Karte 40 derart durchgeführt, daß ein Stempel den für den Kartenkörper 42 vorgesehenen Teilformraum ausfüllt, wobei das erste Kunststoffmaterial in den anderen Teilformraum eingespritzt wird zur Herstellung der Minichipkarte 41. Nach Entfernen des Stempels, wobei sich das erste Kunststoffmaterial unter Schrumpfung abgekühlt hat, wird das zweite Kunststoffmaterial in den für den Kartenkörper 42 vorgesehenen Teilformraum eingespritzt. Durch die nachfolgende Schrumpfung des zweiten Kunststoffmaterials drückt die Randfläche 44 des Kartenkörpers 42 auf die Randfläche 43 der Minichipkarte 43, so daß diese formschlüssig gehalten ist. Eine Ausstanzung eines Spaltes zur Trennung zwischen Minichipkarte 31 und Kartenkörper 42 ist nicht erforderlich.

Alternativ können auch Materialien gewählt werden, die ein unterschiedliches Schrumpfverhalten haben, insbesondere das dem Kartenkörper 42 zugeordnete Kunststoffmaterial eine größere Schrumpfneigung aufweist als das der Minichipkarte 41 zugeordnete Kunststoffmaterial. Hierdurch kann der Herstellungsprozeß beschleunigt werden.

Wie insbesondere aus Fig. 7 deutlich wird, hat die Minichipkarte 41 an einer kurzen Seite einen schwalbenschwanzförmigen Fortsatz 45, der in einer Aufnahme 46 des Kartenkörpers 42 eingreift. Dies wird herstellungstechnisch durch einen entsprechend konturierten Stempel realisiert. Durch die Ausbildung des Fortsatzes 45 wird eine verbesserte klemmende Halterung der Minichipkarte 41 innerhalb der Aussparung des Kartenkörpers 42 geschaffen.

Beispielhaft sind als erste und zweite Kunststoffmaterialien, die nicht chemisch miteinander verbindbar sind, das Kunststoffmaterial PA auf der einen Seite und POM auf der anderen Seite zu nennen. Ferner PS einerseits und PBT oder PC oder PMMA andererseits.

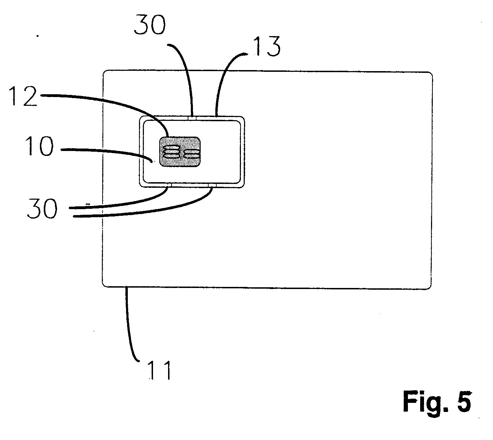

Alternativ kann auch zuerst das zweite Kunststoffmaterial in den zweiten Teilformraum und dann das erste Kunststoffmaterial in den ersten Teilformraum gespritzt werden. Wesentlich ist, daß eine Chipkarte gemäß Fig. 5 gebildet ist, deren Minichipträger 10 aus einem anderen Kunststoffmaterial besteht als der diesen umgebende Kartenkörper 11.

## Patentansprüche

1. Verfahren zum Herstellen einer Chipkarte durch Einspritzen eines schmelzflüssigen Kunststoffmaterials in einen Formraum und anschließendem Abkühlen des Kunststoffmaterials, dadurch gekennzeichnet,
- daß ein erstes Kunststoffmaterial in einen ersten Teilformraum (6, 23) eingespritzt wird,
- daß ein einen zweiten Teilformraum (7, 22) von dem ersten Teilformraum (6, 23) abschließender Schieber (1, 15, 20, 25) aus dem Formraum herausbewegt wird und
- daß ein zweites Kunststoffmaterial in den zweiten Teilformraum (7, 22) eingespritzt wird.

2. Verfahren nach Anspruch 1, dadurch gekennzeichnet, daß das erste Kunststoffmaterial und das zweite Kunststoffmaterial rechtwinkelig zueinander in den korrespondierenden ersten Teilformraum (6, 23) bzw. den zweiten Teilformraum (7, 22) eingespritzt werden.

3. Verfahren nach einem der Anspruch 1 oder 2, dadurch gekennzeichnet, daß gleichzeitig mit dem Herausbewegen des Schiebers (20, 25) mindestens ein weiteres Werkzeugteil (24, 31) in Richtung des Formraums hinbewegt wird.

4. Verfahren nach einem der Ansprüche 1 bis 3, dadurch gekennzeichnet, daß das zweite Kunststoffmaterial korrespondierend zu der Bewegungsrichtung des Schiebers (1, 15, 20, 25) in den zweiten Teilformraum (7, 22) eingespritzt wird.

5. Verfahren nach einem der Ansprüche 1 bis 4, dadurch gekennzeichnet, daß der Schieber (15) in eine erste Stellung gebracht wird, in der er den ersten Teilformraum (6) von dem zweiten Teilformraum (7) vollständig abschließt, und dann in eine zweite Stellung bewegt wird, in der der Schieber (15) mit einem Kavitätsformer (16) eine Vertiefung in dem zu bildenden Minichipträger (10) bildet.

6. Verfahren nach einem der Ansprüche 1 bis 5, dadurch gekennzeichnet, daß das in den ersten Teilformraum (6, 23) eingespritzte erste Kunststoffmaterial bereits geschrumpft ist, bevor das zweite Kunststoffmaterial in den zweiten Teilformraum (7,22) eingespritzt wird.

7. Verfahren nach Anspruch 6, dadurch gekennzeichnet, daß das zweite Kunststoffmaterial nach dem Einspritzen desselben unter Anlage seiner Randflächen an dem durch das erste Kunststoffmaterial gebildeten Körper geschrumpft wird, so daß der Körper formschlüssig durch das einen zweiten Körper bildenden zweiten Kunststoffmaterial gehalten ist.

8. Vorrichtung zur Durchführung des Verfahrens nach Anspruch 1, mit einer Form, welche wenigstens einen Formraum einschließt und die relativ zueinander bewegliche Formteile aufweist, dadurch gekennzeichnet,
- daß eine erste Einspritzdüse (8) vorgesehen ist zum Einspritzen eines ersten Kunststoffmaterials in einen ersten Teilformraum (6, 23),
- daß eine zweite Einspritzdüse (9) vorgesehen ist zum Einspritzen eines zweiten Kunststoffmaterials in einen zweiten Teilformraum (7, 22) und
- daß die erste Einspritzdüse (8) senkrecht zu der zweiten Einspritzdüse (9) angeordnet ist.

9. Vorrichtung nach Anspruch 8, dadurch gekennzeichnet, daß ein Schieber (1, 15, 20, 25) vorgesehen ist, der in einer Ausgangsstellung den zweiten Teilformraum (7, 22) von dem ersten Teilformraum (6, 23) abschließt und in einer zweiten Stellung den zweiten Teilformraum (7, 22) freigibt.

10. Vorrichtung nach Anspruch 8 oder 9, dadurch gekennzeichnet, daß der Schieber (1, 15, 20, 25) senkrecht zu einer Längsebene des Formraums bewegbar ausgebildet ist.

11. Vorrichtung nach einem der Ansprüche 8 bis 10, dadurch gekennzeichnet, daß der Schieber (1, 15, 20, 25) derart angeordnet ist, daß der zweite Teilformraum (7, 22) als innere Teilformraum ausgebildet ist, der von dem ersten Teilformraum (6, 23) als äußeren Teilformraum umgeben ist.

12. Vorrichtung nach einem der Ansprüche 8 bis 11, dadurch gekennzeichnet, daß der Schieber (20, 25) hohlförmig ausgebildet ist und daß der Schieber (20, 25) gleichsinnig oder entgegengerichtet bewegbar zu einem weiteren bewegbaren Formwerkzeugteil (24, 31) angeordnet ist.

13. Vorrichtung nach einem der Ansprüche 8 bis 12, dadurch gekennzeichnet, daß der Schieber (25) Rahmenseiten (27) aufweist, die an einer Seite mindestens ein Einkerbung (28) aufweist, derart, daß in einer ersten Stellung des Schiebers (25) der erste Teilformraum (23) von dem zweiten Teilformraum (22) getrennt ist und in einer zweiten Stellung des Schiebers (25) derselbe um einen Weg verschoben ist, so daß beim Einspritzen eines zweiten Kunststoffmaterials ein Verbindungsarm (30) zwischen einem zum ersten Kunststoffmaterial korrespondierenden Kartenkörper (11) und einem zu dem zweiten Kunststoffmaterial korrespondierenden Minichipkartenträger (10) gebildet ist.

14. Chipkarte, bestehend aus einer Minichipkarte und einem diese umgebenden Kartenkörper, dadurch gekennzeichnet, daß die Minichipkarte aus einem ersten Kunststoffmaterial und der Kartenkörper (11) aus einem zweiten Kunststoffmaterial herstellbar sind.

15. Chipkarte nach Anspruch 14, dadurch gekennzeichnet, daß die Kunststoffmaterialien eine solche chemische Eigenschaft aufweisen, daß das erste und das zweite Kunststoffmaterial in einem die Betriebstemperatur des Spritzgießvorgangs enthaltenen Temperaturbereich nicht miteinander verbindbar sind.

16. Chipkarte nach Anspruch 14 oder 15, dadurch gekennzeichnet, daß das erste Kunststoffmaterial aus Polyamid (PA) und das zweite Kunststoffmaterial aus Polyacetal (POM) oder vice versa besteht.

17. Chipkarte nach Anspruch 14 oder 15, dadurch gekennzeichnet, daß das erste Kunststoffmaterial aus Polystyrol (PS) und das zweite Kunststoffmaterial aus Polybutylentherephthalat (PBT) oder Polycarbonat (PC) oder Polymethylmethacrylat (PMMA) besteht.
